# EUROPÄISCHE PATENTSCHRIFT

(11) **EP 2 633 749 B1**
(45) Veröffentlichungstag und Bekanntmachung des Hinweises auf die Patenterteilung: **14.11.2018**
(21) Anmeldenummer: 13001025.9
(22) Anmeldetag: 28.02.2013
(51) Int. Cl.: A01D 82/00

(54) **Erntemaschine**
Harvester
Moissonneuse

(30) Priorität: 29.02.2012 DE 202012002112 U
(43) Veröffentlichungstag der Anmeldung: 04.09.2013
(73) Patentinhaber: PÖTTINGER Landtechnik GmbH, 4710 Grieskirchen (AT)
(72) Erfinder: Putz, Christian, 4850 Timelkam (AT); Lehner, Josef, 4732 St. Thomas (AT); Greifeneder, August, 4707 Schlüsslberg (AT); Kreupl, Walter, 4676 Aistersheim 46 (AT)
(74) Vertreter: Thoma, Michael

(56) Entgegenhaltungen:
- CA-A1- 2 136 499
- DE-A1-102005 050 157
- US-A- 3 393 499
- US-A- 4 068 453

## Beschreibung

Die vorliegende Erfindung betrifft eine Erntemaschine zur Bearbeitung von Erntegut, mit zumindest einer Aufbereitereinheit, die zumindest zwei zusammenwirkende, vorzugsweise etwa walzenförmige, Aufbereiterrotoren zur Erntegutkonditionierung umfasst, wobei die Aufbereiterrotoren von einer Antriebsvorrichtung aufeinander abgestimmt antreibbar sind.

Eine solche Erntemaschine ist beispielsweise aus der DE 10 2005 050 157 A1 bekannt. Wie in dieser Schrift gezeigt, werden derartige Aufbereitereinheiten mit walzenförmigen Aufbereiterrotoren bisweilen hinter Mähmaschinen bzw. hinter Mähwerken angeordnet, um das von den Mähwerken abgemähte Erntegut aufzuschließen, so dass eine schnellere Trocknung des Ernteguts erreicht werden kann. Derartige Konditionierer können hierbei zumindest ein Paar von Aufbereiterwalzen besitzen, die gegenläufig umlaufen, so dass das Erntegut zwischen ihnen hindurchgefördert und dabei gequetscht und geknickt wird. Diesem Konditionierwalzenpaar können weitere umlaufende Rotoren wie beispielsweise eine Beschleunigerwalze zugeordnet sein, um das abgemähte Erntegut von Mähwerk her kommend auf die Konditionierwalzen zu werfen oder insbesondere das von den Konditionierwalzen abgegebene, aufbereitete Erntegut zu beschleunigen und auf einen Querförderer zu werfen.

Das zumindest eine zusammenwirkende Paar von Aufbereiterrotoren weist dabei oftmals umfangsseitig ineinander greifende Profilierungen wie beispielsweise schraubenlinienförmig verlaufende bzw. angeordnete Profilsegmente auf, die ineinander greifen, wenn die Aufbereiterrotoren umfangsseitig sozusagen aufeinander ablaufen. Hierzu müssen die Aufbereiterrotoren hinsichtlich ihren Drehzahlen exakt aufeinander abgestimmt laufen, so dass die ineinander greifenden Profilierungen nicht klemmen oder miteinander kollidieren. Bei Aufbereiterrotoren mit gleichem Durchmesser laufen die Aufbereiterrotoren gegenläufig synchron mit der gleichen Drehzahl. Um einen solchermaßen drehzahlmäßig aufeinander abgestimmten Betrieb der zusammenwirkenden Aufbereiterrotoren zu erreichen, ist es sinnvoll, die zusammenwirkenden Aufbereiterrotoren getrieblich miteinander zu koppeln, so dass die Aufbereiterrotoren synchron zueinander laufen, auch wenn beispielsweise unter Belastungsspitzen die Drehzahl beider Arbeitsrotoren absinkt. Eine solche getriebliche Koppelung der beiden Arbeitsrotoren ist jedoch nicht ganz einfach zu bewerkstelligen dann, wenn die Arbeitsrotoren abstandsveränderlich zueinander aufgehängt sind. Eine solche bewegliche, insbesondere abstandsveränderliche Aufhängung der Aufbereiterrotoren ist sinnvoll, um bei quantitativ schwankenden Erntegutströmen einerseits ein Verstopfen der Aufbereitervorrichtung zu vermeiden und andererseits eine stets effektive Konditionierung des Ernteguts zu erreichen. Nimmt der in den Aufbereiter gelangende Erntegutstrom volumenmäßig zu, können die Aufbereiterrotoren, zwischen denen das Erntegut hindurchgefördert werden soll, voneinander wegbewegt werden und auf einen größeren Abstand voneinander gebracht werden, so dass ein größerer Durchsatz ermöglicht wird. Andererseits können die Aufbereiterrotoren zusammenfahren, wenn die Erntegutmenge absinkt, um dann immer noch eine ausreichende Konditionierwirkung auf den dünner werdenden Erntegutstrom zu erzielen.

Hinsichtlich des Antriebs der zusammenwirkenden Aufbereiterrotoren wurde bereits vorgeschlagen, zwischen den Aufbereiterrotoren ein Stirnradgetriebe vorzusehen, über das die Aufbereiterrotoren miteinander synchronisiert werden. Ein solches Stirnradgetriebe ist jedoch hinsichtlich Abstandsänderungen der ineinander greifenden Zahnräder, die durch die verstellbare Lagerung der Aufbereiterrotoren entstehen können, relativ kritisch, da dann die Zahnräder nicht mehr exakt ineinander greifen und die Zahnflanken nicht mehr präzise aufeinander abrollen. Zudem ist vom baulichen Aufwand abgesehen stets eine ausreichende Schmierung sicherzustellen und eine Verschmutzung zu vermeiden, da ansonsten vorzeitiger Verschleiß der Stirnradgetriebestufe droht. Alternativ zu einem solchen Stirnradgetriebe wurde auch bereits vorgeschlagen, die miteinander zu synchronisierenden, zusammenwirkenden Aufbereiterrotoren durch einen Kettentrieb miteinander zu koppeln. Ein solcher Kettentrieb unterliegt jedoch hinsichtlich Schmierung und Verschmutzung ähnlichen Randbedingungen wie ein Stirnradgetriebe.

Aus den beiden Schriften CA 2136499 A1 und US 4,068,453 B1 sind jeweils Konditionierer mit solchen zusammenwirkenden Aufbereiterrotoren bzw. Konditioniererwalzen bekannt, die im Abstand voneinander veränderlich sind. Um ein definiertes Abrollen der Walzen aufeinander bzw. ineinander greifender Umfangsprofilierungen zu erzielen, werden die beiden Konditioniererwalzen rotatorisch miteinander durch einen Kettentrieb gekoppelt, bei dem eine Kette sowohl um das Antriebsritzel der einen Konditioniererwalze als auch um das Antriebsritzel der anderen Konditioniererwalze umläuft. Einen weiteren vorbekannten Kettentrieb für ein Paar Konditioniererwalzen zeigt die Schrift US 3,393,499 B1, wobei in dieser Schrift die Konditioniererwalzen in ihrem Abstand fest zueinander angeordnet sind.

Der vorliegenden Erfindung liegt die Aufgabe zugrunde, eine verbesserte Erntemaschine der eingangs genannten Art zu schaffen, die Nachteile des Standes der Technik vermeidet und Letzteren in vorteilhafter Weise weiterbildet. Insbesondere soll ein weitgehend wartungsfreier, im Betrieb leiser und hinsichtlich Verschmutzungen robuster Antrieb der Aufbereiterrotoren geschaffen werden, der nichtsdestotrotz eine präzise Abstimmung der Drehzahlen der zusammenwirkenden Aufbereiterrotoren, insbesondere einen synchronen Lauf der Aufbereiterrotoren sicherstellt.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, die zusammenwirkenden Aufbereiterrotoren durch einen Riementrieb miteinander zu koppeln, um einen hinsichtlich der Drehzahl fein aufeinander abgestimmten Lauf der beiden Aufbereiterrotoren zu erzielen. Die Koppelung erfolgt hierbei über zwei Riemen und eine Zwischenscheibe, so dass der Riementrieb gegenüber Abstandsveränderungen der Aufbereiterrotoren unempfindlich wird bzw. solche Abstandsveränderungen ermöglicht.

Ein erster Riemen koppelt einen ersten Aufbereiterrotor mit einer Zwischenriemenscheibe, die über einen zweiten Riemen den zweiten Aufbereiterrotor antreibt. Durch einen solchen Riementrieb mit zwei Riemen und einer Zwischenriemenscheibe zwischen den beiden miteinander zu synchronisierenden bzw. aufeinander abzustimmenden Aufbereiterrotoren kann ein nahezu wartungsfreier Antrieb der Aufbereitereinheit, ein leiser Betrieb und ein nur geringer Schmutzaufbau im Antriebsgehäuse erzielt werden.

Dabei sind die zwei zusammenwirkenden Aufbereiterrotoren zueinander abstandsveränderlich gelagert bzw. aufgehängt, so dass der Durchtrittsspalt zwischen den beiden Aufbereiterrotoren an den Erntegutstrom und/oder andere Ernteguteigenschaften angepasst werden kann. Insbesondere kann ein oberer der beiden zusammenwirkenden Aufbereiterrotoren höhenbeweglich über dem unteren Aufbereiterrotor angeordnet sein, so dass der obere Aufbereiterrotor sich bei zunehmendem Erntegutstrom nach oben bewegen und hierdurch den Durchtrittsspalt vergrößern kann, während sich der genannte obere Aufbereiterrotor auf den unteren Aufbereiterrotor absenken kann, wenn der Erntegutstrom dünner wird. Durch den Riementrieb ist hierbei sichergestellt, dass die Arbeitsrotoren auch dann, wenn durch Auseinanderbewegen kein Eingriff mehr zwischen den Arbeitsrotoren besteht, die Drehzahlabstimmung und/oder Drehwinkelabstimmung beibehalten wird, so dass beim Wiederzusammenfahren der Aufbereiterrotoren daran vorgesehene Profilierungen passgenau ineinanderfahren und ineinandergreifen können.

Insbesondere kann der zweite Aufbereiterrotor zusammen mit der genannten Zwischenriemenscheibe an einem Rotorträger gelagert sein, der selbst wiederum beweglich gelagert ist, um die gewünschte Beweglichkeit des zweiten Aufbereiterrotors relativ zum ersten Aufbereiterrotor zu ermöglichen. Hierbei kann der genannte Rotorträger vorteilhafterweise schwenkbar um eine Trägerachse gelagert sein, die im Bereich der Zwischenriemenscheibe näherungsweise parallel zur Drehachse der Zwischenriemenscheibe angeordnet ist. Durch die Anordnung der Schwenkachse des Rotorträgers benachbart bzw. nahe zur Zwischenriemenscheibe, kann der durch Bewegungen des Rotorträgers entstehende Achsversatz minimiert und ein korrektes Umlaufen der Riemen ohne Durchrutschen oder Überspannen der Riemen auch ohne Riemenspannmechanismen mit großen Stellwegen ermöglicht werden. Insbesondere kann der Riementrieb zwischen der Zwischenriemenscheibe und dem zweiten Aufbereiterrotor ggf. auch ganz ohne beweglichem Riemenspanner ausgebildet sein, da die Zwischenriemenscheibe und der zweite Aufbereiterrotor an einem gemeinsamen Rotorträger gelagert sind, so dass sich der Abstand von Zwischenriemenscheibe und zweitem Aufbereiterrotor auch bei Bewegungen des zweiten Aufbereiterrotors nicht ändert. Um auch Abstandsveränderungen zwischen der Zwischenriemenscheibe und dem ersten Aufbereiterrotor möglichst gänzlich zu eliminieren, wenn sich der zweite Aufbereiterrotor bewegt, kann in Weiterbildung der Erfindung die Trägerachse zur schwenkbaren Lagerung des Rotorträgers koaxial zur Drehachse der Zwischenriemenscheibe angeordnet werden.

In Weiterbildung der Erfindung ist der Riementrieb derart ausgebildet, dass die ersten und zweiten Aufbereiterrotoren zueinander gegensinnig synchron antreibbar sind. Synchron meint dabei, dass die einander zugewandten Umfangssektoren der Aufbereiterrotoren dieselbe Umfangsgeschwindigkeit haben, so dass die entsprechenden Umfangssegmente, wenn sie sich denn berühren würden, aufeinander abrollen können. Besitzen die beiden zusammenwirkenden Aufbereiterrotoren denselben Durchmesser, drehen sich die Arbeitsrotoren bei synchronem Lauf mit gleicher Drehzahl. Die Aufbereiterrotoren müssen jedoch nicht zwangsweise identische Durchmesser besitzen, wobei dann der im Durchmesser kleinere Aufbereiterrotor mit einer entsprechend höheren Drehzahl rotieren kann, um einen synchronen Lauf zu erzielen, bei dem die Umfangsgeschwindigkeiten im vorgenannten Sinne näherungsweise gleich sind.

Die Antriebskraft bzw. das Antriebsmoment kann grundsätzlich von verschiedenen Stellen her in den Riementrieb eingespeist werden, wobei beispielsweise die genannte Zwischenriemenscheibe mit dem Antriebsmotor gekoppelt sein könnte, beispielsweise über einen weiteren Riemen. In vorteilhafter Weiterbildung der Erfindung jedoch erfolgt der Antrieb der Aufbereiterrotoren von einem der Aufbereiterrotoren her. Insbesondere wird einer der Aufbereiterrotoren vom Antriebsmotor her angetrieben, während der Antrieb des anderen Aufbereiterrotors von dem angetriebenen Aufbereiterrotor her abgeleitet wird. Insbesondere kann der vorgenannte erste Aufbereiterrotor mit einem Antriebsmotor direkt oder mittelbar getrieblich verbunden sein, wobei der Antriebsmotor vorteilharfterweise an einem dem Riementrieb gegenüberliegenden Rotorende mit dem Aufbereiterrotor gekoppelt sein kann. Hierdurch wird für den Riementrieb Platz geschaffen bzw. der für den Riementrieb vorgesehene Bauraum nicht durch den Antriebsmotor beeinträchtigt. Die Zwischenriemenscheibe kann in Weiterbildung der Erfindung frei drehbar gelagert sein und von dem ersten Aufbereiterrotor her angetrieben werden, der in der genannten Weise mit dem Antriebsmotor gekoppelt sein kann. Die vom ersten Aufbereiterrotor her angetriebene Zwischenriemenscheibe treibt dann über den zweiten Riemen den zweiten Aufbereiterrotor an. Grundsätzlich könnte auch eine umgekehrte Ankoppelung des Antriebsmotors vorgesehen sein, dergestalt, dass der zweite Aufbereiterrotor mit dem Antriebsmotor direkt oder mittelbar getrieblich gekoppelt ist und sodann über die Zwischenriemenscheibe der Antrieb für den zweiten Aufbereiterrotor abgeleitet wird. Vorteilhafterweise jedoch ist der Antriebsmotor mit dem drehbar, ansonsten jedoch vorteilhafterweise unbeweglich gelagerten ersten Arbeitsrotor gekoppelt, da hier keine bewegliche Lagerung des Antriebsmotors oder sonstige Maßnahmen zur Ermöglichung der Rotorbewegung vorgesehen werden muss.

Um die beiden Riemen koordiniert über die gemeinsame Zwischenriemenscheibe laufen zu lassen, weist die genannte Zwischenriemenscheibe zwei nebeneinander angeordnete Riemeneingriffsabschnitte für die beiden ersten und zweiten Riemen auf, wobei die genannten Riemeneingriffsabschnitte unmittelbar nebeneinander, vorteilhafterweise nur durch eine Trennkontur voneinander getrennt angeordnet sein können, um eine axial möglichst kurze Bauweise erzielen zu können. Gegebenenfalls wäre jedoch auch eine beabstandete Anordnung der beiden Riemeneingriffsabschnitte möglich, um die beiden Riemen in weiterem Abstand voneinander über die Zwischenriemenscheibe führen zu können. Je nach Konfiguration der beiden Aufbereiterrotoren können die

Riemeneingriffsabschnitte verschiedene Durchmesser und/oder verschiedene Zähnezahlen
besitzen. Insbesondere dann, wenn die Aufbereiterrotoren denselben Durchmesser haben und/oder mit identischer Drehzahl laufen, können die beiden Riemeneingriffsabschnitte der Zwischenriemenscheibe denselben Durchmesser und/oder dieselbe Zähnezahl aufweisen.

Der erste Riemen und/oder der zweite Riemen können in vorteilhafter Weiterbildung der Erfindung als Zahnriemen ausgebildet sein. Hierdurch wird eine exakte synchrone Drehung der Aufbereiterrotoren sichergestellt.

In Weiterbildung der Erfindung kann die Gegenläufigkeit der rotatorischen Antriebsbewegungen der beiden miteinander gekoppelten Aufbereiterrotoren dadurch erzielt werden, dass einer der Riemen an der Zwischenriemenscheibe und dem zugehörigen Aufbereiterrotor bzw. der damit verbundenen Rotorriemenscheibe mit unterschiedlichen Riemenseiten in Eingriff steht, während der andere Riemen mit derselben Seite sowohl an der Zwischenriemenscheibe als auch dem zugehörigen Aufbereiterrotor bzw. der damit verbundenen Rotorscheiben angreift. Insbesondere kann der zweite Riemen, der den zweiten Arbeitsrotor von der Zwischenriemenscheibe her antreibt, mit einer Riemeninnenseite sowohl an der Zwischenriemenscheibe als auch an der mit dem zweiten Arbeitsrotor verbundenen Rotorriemenscheibe angreifen. Insbesondere wenn die Zwischenriemenscheibe und der zweite Aufbereiterrotor an einem gemeinsamen Trägerteil abstandsunveränderlich zueinander gelagert sind, kann hierdurch eine sehr einfache zweite Riemenstufe vorgesehen werden. Andererseits kann in Weiterbildung der Erfindung der erste Riemen, der den ersten Arbeitsrotor mit der Zwischenriemenscheibe koppelt, mit unterschiedlichen Riemenseiten um die Zwischenriemenscheibe einerseits und die mit dem ersten Aufbereiterrotor verbundene erste Rotorriemenscheibe andererseits umlaufen, derart, dass die Zwischenriemenscheibe gegenläufig zu dem ersten Aufbereiterrotor rotiert. Insbesondere kann der erste Riemen einen gegenläufig gekrümmten Umlaufweg durchlaufen bzw. kann die Umlaufbahn des ersten Riemens unterschiedlich gekrümmte Umlenkabschnitte aufweisen. In Weiterbildung der Erfindung kann der genannte erste Riemen über den ersten Aufbereiterrotor bzw. eine damit verbundene erste Rotorscheibe, die Zwischenriemenscheibe und zumindest eine weitere Riemenscheibe geführt sein, wobei die genannte weitere Riemenscheibe eine Spannscheibe und/oder eine weitere Antriebsscheibe umfassen kann, um einen weiteren Arbeitsrotor, insbesondere eine Beschleunigerwalze anzukoppeln und durch den ersten Riemen anzutreiben. Eine Spannscheibe kann vorgesehen sein, um bei einer Beweglichkeit der Zwischenriemenscheibe, die zur Ermöglichung der Beweglichkeit des zweiten Aufbereiterrotors vorgesehen sein kann, und/oder bei beweglicher Aufhängung des ersten Aufbereiterrotors Längenänderungen des Umlaufweges ausgleichen und den Riemen stets gespannt halten zu können.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Draufsicht auf eine Erntemaschine nach einer vorteilhaften Ausführung der Erfindung, die eine Mähmaschine mit Front- und Heckmähwerken und den Heckmähwerken nachgeschaltete Aufbereitereinheiten umfasst,
- Fig. 2:: eine ausschnittsweise, perspektivische Darstellung einer Aufbereitereinheit der Erntemaschine aus der vorhergehenden Figur, wobei die beiden ineinander greifenden, gegenläufig synchron antreibbaren Aufbereiterrotoren und der für deren Antrieb vorgesehene Riementrieb dargestellt sind, und
- Fig. 3:: eine schematische, perspektivische Draufsicht auf den Riementrieb aus Fig. 2.

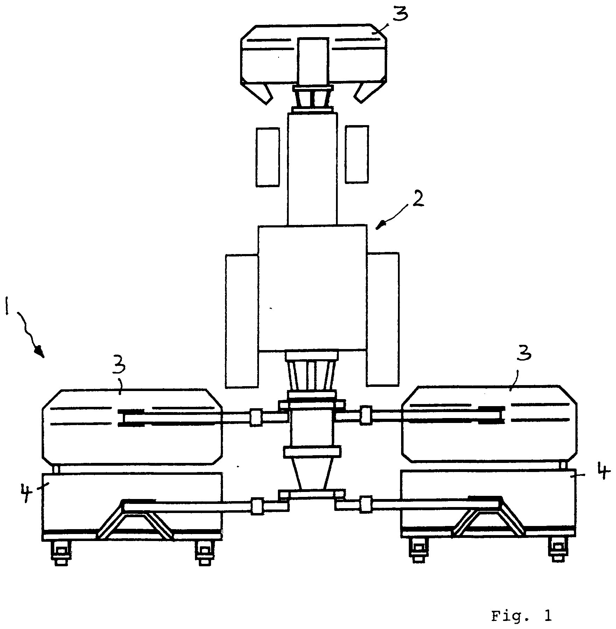

Wie Fig. 1 zeigt, kann die Erntemaschine 1 als Anbaugerät ausgebildet sein, das an einen Schlepper 2 angebaut werden kann, sei es durch eine Dreipunktaufhängung oder eine Deichselanlenkung bei einem gezogenen Anbaugerät. Die Erntemaschine 1 kann hierbei mehrere Mähwerke 3 umfassen, wobei zumindest einem der Mähwerke 3 eine Aufbereitereinheit 4 nachgeschaltet ist, mittels derer das vom vorauslaufenden Mähwerk 3 geschnittene Erntegut aufgeschlossen bzw. konditioniert wird.

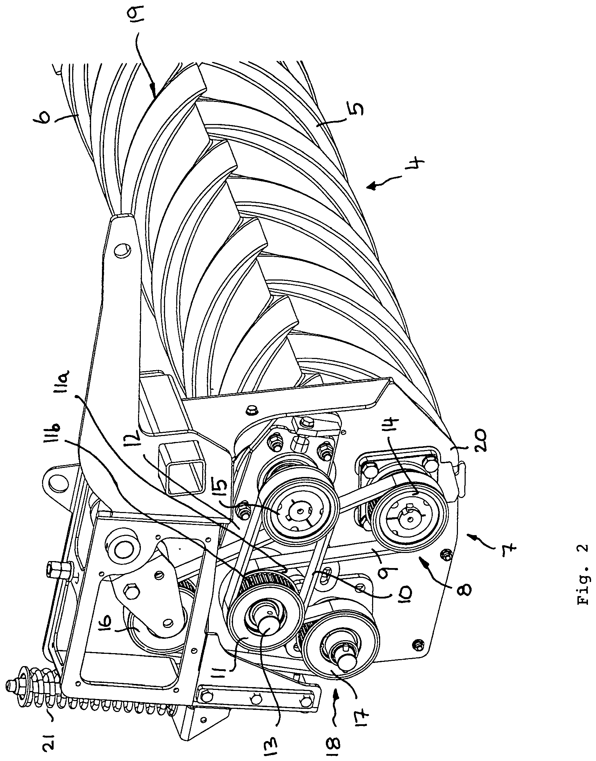

Wie Fig. 2 zeigt, kann eine solche Aufbereitereinheit 4 zumindest zwei zusammenwirkende Aufbereiterrotoren 5 und 6 umfassen, die um zueinander zumindest näherungsweise parallele Drehachsen rotatorisch angetrieben werden, und zwar vorteilhafterweise zueinander gegenläufig, so dass zwischen den beiden Antriebsrotoren das geschnittene Erntegut hindurchgefördert werden kann und hierbei eine Quetschung, Knickung und/oder Druckbeanspruchung erfährt, die den gewünschten Konditioniereffekt des Ernteguts bewirkt. Die genannten Arbeitsrotoren 5 und 6 können hierbei grundsätzlich verschieden ausgebildet sein, insbesondere eine walzenförmige Konfiguration besitzen. In Weiterbildung der Erfindung können die genannten Aufbereiterrotoren umfangsseitig eine Profilierung besitzen, mit der die Aufbereiterrotoren bei gegensinnigem rotatorischen Antreiben ineinander greifen. Wie Fig. 2 zeigt, kann die genannte Rotorenprofilierung 19 schraubenförmig ausgebildet sein bzw. schraubenlinienförmig angeordnete bzw. verlaufende Profilsegmente umfassen, die umfangsseitig von den Rotoren vorspringen und ineinander greifen. Grundsätzlich sind jedoch auch andere Profilierungen wie beispielsweise Längsstege oder eine Riffelung oder dergleichen möglich.

Das Spaltmaß zwischen den beiden zusammenwirkenden Aufbereiterrotoren 5 und 6 ist vorteilhafterweise veränderlich. Wie Fig. 2 zeigt, kann hierzu insbesondere der obere Aufbereiterrotor 6 höhenveränderlich gelagert sein, so dass der obere Aufbereiterrotor 6 bei einem dicken Erntegutstrom nach oben weggedrückt werden kann, um das Spaltmaß zwischen den Aufbereiterrotoren 5 und 6 zu vergrößern. Umgekehrt kann der obere Aufbereiterrotor 6 beispielsweise durch seine Schwerkraft nach unten gedrückt werden, wenn der Erntegutstrom dünner wird. Hierzu kann der genannte obere Aufbereiterrotor 6 endseitig an einem höhenbeweglichen Rotorträger 12 aufgehängt und drehbar gelagert sein. Der genannte Rotorträger 12 kann selbst schwenkbar gelagert sein, wobei die die Schwenkbarkeit ermöglichende Trägerachse 13 von der Drehachse des Aufbereiterrotors 6 beabstandet ist und vorteilhafterweise näherungsweise auf derselben Höhe wie die zweite Aufbereiterwalze 6 angeordnet sein, so dass sich eine näherungsweise vertikale Auf- und Abbewegbarkeit des zweiten Aufbereiterrotors 6 ergibt. Der genannte Rotorträger 12 kann jedoch alternativ oder zusätzlich auch in anderer Weise beweglich gelagert sein, beispielsweise durch Langlochführungen längsverschieblich gelagert sein oder über eine Lenkeranordnung höhenbewegbar aufgehängt sein. Die Lagerung des Rotorträgers 12 kann hierbei an seitlichen Lagerschilden 20 oder einem anderen rahmenfesten Trägerteil vorgesehen sein, an dem der erste Aufbereiterrotor 5 drehbar, aber vorzugsweise ortsfest gelagert sein kann und/oder weitere Komponenten der Aufbereitereinheit 4 gelagert sein können. Derartige weitere Komponenten können insbesondere ein Beschleunigerrotor 18 sein, wie noch näher erläutert wird. Zusätzlich zu der beschriebenen Relativbeweglichkeit der beiden Aufbereiterrotoren 5 und 6 kann die gesamte Aufbereitereinheit 4 um zumindest eine weitere Bewegungsachse beweglich aufgehängt sein, insbesondere höhenbewegbar, um eine bessere Bodenanpassung zu ermöglichen. Eine Federeinrichtung 21 kann hierbei zur Gewichtsentlastung vorgesehen sein.

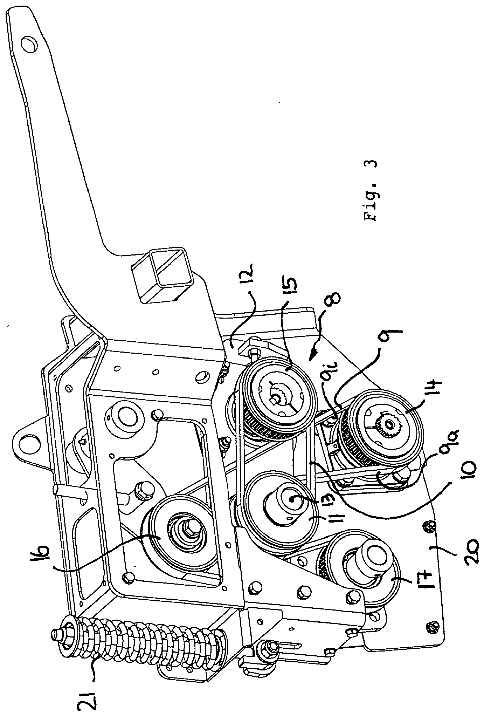

Die genannten Aufbereiterrotoren 5 und 6 sind durch eine Antriebsvorrichtung 7 rotatorisch antreibbar, wobei in vorteilhafter Weiterbildung der Erfindung die genannten Antriebsvorrichtung 7 einen nicht eigens gezeigten Antriebsmotor umfassen kann, der vorteilhafterweise den ersten Aufbereiterrotor 5 antreiben kann. Der Antriebsmotor kann hierbei an dem gegenüberliegenden Rotorende, welches in den Figuren nicht gezeigt ist, vorgesehen sein, um für den Riementrieb 8 auf der gezeigten Seite der Aufbereiterrotoren 5 Platz zu schaffen. Der genannte Riementrieb 8 koppelt die Aufbereiterrotoren 5 und 6 miteinander und kann darüber hinaus auch noch zum Antrieb des vorgenannten Beschleunigerrotors 18 genutzt werden. Wie die Figuren 2 und 3 zeigen, kann der genannte Riementrieb 8 zwei separate Riemen umfassen, die vorteilhafterweise jeweils als Zahnriemen ausgebildet sein können.

Ein erster Riemen 9 koppelt hierbei rotatorisch eine Zwischenriemenscheibe 11 mit dem genannten ersten, angetriebenen Aufbereiterrotor 5, während ein zweiter Riemen 10 die genannte Zwischenriemenscheibe 11 an den zweiten Aufbereiterrotor 6 anbindet, um den genannten zweiten Aufbereiterrotor 6 von der Zwischenriemenscheibe 11 her anzutreiben.

Wie die Figuren 2 und 3 zeigen, kann der erste Riemen 9 um eine erste Rotorscheibe 14, die mit dem ersten Aufbereiterrotor 5 verbunden ist, sodann die genannte Zwischenriemenscheibe 11 sowie weitere Riemenscheiben umlaufen und hierbei eine Umlaufbahn beschreiben, die gegenläufig gekrümmte Umlenkabschnitte beschreibt. Insbesondere kann der erste Riemen 9 mit der ersten Rotorriemenscheibe 14 mit einer Riemeninnenseite 9i in Eingriff stehen, während der erste Riemen 9 mit der Zwischenriemenscheibe 11 mit einer Riemenaußenseite 9a in Eingriff steht, so dass die Zwischenriemenscheibe 11 gegenläufig zur ersten Rotorriemenscheibe 14 dreht. Näherungsweise auf derselben Seite der Zwischenriemenscheibe 11 wie die genannte erste Rotorriemenscheibe 14 ist eine Beschleunigerrotorscheibe 17 angeordnet, so dass der Riemen 9 um die Zwischenriemenscheibe 11 einen ausreichenden Umschlingungswinkel besitzt. Die genannte Beschleunigerriemenscheibe 17 ist mit einer Beschleunigerwalze bzw. einem Beschleunigungsrotor 18 verbunden, der den Aufbereiterrotoren 5 und 6 nachgeordnet ist, um das von den Aufbereiterrotoren 5 und 6 abgegebene Erntegut zu beschleunigen und/oder in die gewünschte Richtung zu lenken, insbesondere auf einen der Aufbereitereinheit 4 nachgeordneten Querförderer. Weiterhin läuft der Riemen 9 um eine Spannriemenscheibe 16 um, die bezogen auf die erste Rotorriemenscheibe 14 und/oder die Beschleunigerriemenscheibe 17 auf der gegenüberliegenden Seite der Zwischenriemenscheibe 11 angeordnet ist.

Um es beiden Riemen 9 und 10 zu ermöglichen, um die Zwischenriemenscheibe 11 umzulaufen, besitzt die besagte Zwischenriemenscheibe 11 vorteilhafterweise zwei nebeneinander angeordnete Riemeneingriffsabschnitte 11a und 11b, die gemäß der gezeigten Ausführungsform vorteilhafterweise zumindest näherungsweise denselben Durchmesser und/oder dieselbe Zähnezahl aufweisen können. Während um den ersten Riemeneingriffsabschnitt 11a der genannte erste Riemen 9 umläuft, ist der zweite Riemeneingriffsabschnitt 11b der Zwischenriemenscheibe 11 für den zweiten Riemen 10 vorgesehen. Dieser zweite Riemen 10 ist einfach um die genannte Zwischenriemenscheibe 11 und die zweite Rotorriemenscheibe 15 geführt, die mit dem zweiten Aufbereiterrotor 6 drehfest verbunden ist. Der zweite Riemen 10 läuft hierbei jeweils mit seiner Riemeninnenseite um die genannten beiden Riemenscheiben um, so dass der zweite Aufbereiterrotor 6 dieselbe Drehrichtung wie die Zwischenriemenscheibe 11 besitzt. Bei gleichem Durchmesser bzw. gleicher Zähnezahl der beiden Riemeneingriffsabschnitte 11a und 11b der Zwischenriemenscheibe 11 können in vorteilhafter Weiterbildung der Erfindung die beiden Rotorriemenscheiben 14 und 15, die mit den beiden Aufbereiterrotoren 5 und 6 drehfest gekoppelt sind, ebenfalls denselben Durchmesser und/oder dieselbe Zähnezahl besitzen, so dass eine gegenläufige, synchrone Drehung der beiden Aufbereiterrotoren 5 und 6 sichergestellt ist.

Wie Fig. 2 zeigt, sind vorteilhafterweise sowohl die Zwischenriemenscheibe 11 als auch der zweite Aufbereiterrotor 6 an dem gemeinsamen beweglich gelagerten Rotorträger 12 montiert, so dass sich zwischen der Zwischenriemenscheibe 11 und der zweiten Rotorriemenscheibe 15 auch bei Bewegungen des zweiten Aufbereiterrotors 6 keine Abstandsveränderungen ergeben. Vorteilhafterweise ist die Zwischenriemenscheibe 11 hierbei koaxial zur Trägerachse 13, um die der Rotorträger 12 schwenken kann, angeordnet, so dass auch bei Bewegungen des Rotorträgers 12 die Zwischenriemenscheibe 11 von dem ersten Aufbereiterrotor 5 keine nennenswerte Abstandsveränderung erfährt. Bei anderen Konfigurationen und/oder Bewegbarkeiten des Rotorträgers 12 könnte jedoch ggf. auch eine Abstandsveränderung zwischen der Zwischenriemenscheibe 11 und dem ersten Aufbereiterrotor 5 kompensiert werden, wenn eine entsprechend ausgebildete Riemenspannvorrichtung mit ausreichendem Stellweg vorgesehen ist.

Wie die Fig. 2 zeigt, können der erste Riemen 9 und der zweite Riemen 10 in parallelen, voneinander beabstandeten Ebenen umlaufen, wodurch es ermöglicht ist, für die Riemen 9 und 10 - in der Draufsicht gemäß Fig. 3 betrachtet - einander überkreuzende Umlaufbahnen vorzusehen. Hierdurch wird ein größerer Freiheitsgrad für die Anordnung der Aufbereiterrotoren und der Riemenscheiben des Riementriebs 8 erzielt.

## Patentansprüche

1. Erntemaschine zur Bearbeitung von Erntegut, mit zumindest einer Aufbereitereinheit (4), die zumindest zwei zusammenwirkende, vorzugsweise etwa walzenförmige, Aufbereiterrotoren (5, 6) zur Erntegutkonditionierung umfasst, wobei die Aufbereiterrotoren (5, 6) zueinander abstandsveränderlich gelagert und von einer Antriebsvorrichtung (7) aufeinander abgestimmt antreibbar sind, **dadurch gekennzeichnet, dass** die Antriebsvorrichtung (7) einen Riementrieb (8) aufweist, wobei ein erster Riemen (9) einen ersten Aufbereiterrotor (5) mit einer Zwischenriemenscheibe (11) koppelt, die über einen zweiten Riemen (10) den zweiten Aufbereiterrotor (6) antreibt, wobei die genannte Zwischenriemenscheibe (11) zwei nebeneinander angeordnete Riemeneingriffsabschnitte (11a, 11b) für die ersten und zweiten Riemen (9, 10) aufweist und der erste Riemen (9) und der zweite Riemen (10) in parallelen, voneinander beabstandeten Ebenen umlaufen.

2. Erntemaschine nach dem vorhergehenden Anspruch, wobei der zweite Aufbereiterrotor (6) zusammen mit der Zwischenriemenscheibe (11) an einem Rotorträger (12), der beweglich gelagert ist, gelagert ist.

3. Erntemaschine nach dem vorhergehenden Anspruch, wobei der genannte Rotorträger (12) schwenkbar um eine Trägerachse (13) gelagert ist, die im Bereich der Zwischenriemenscheibe (11) näherungsweise parallel zur Drehachse der Zwischenriemenscheibe (11), insbesondere etwa koaxial zu der Drehachse der Zwischenriemenscheibe (11) angeordnet ist.

4. Erntemaschine nach einem der vorhergehenden Ansprüche, wobei der Riementrieb (8) derart ausgebildet ist, dass die ersten und zweiten Aufbereiterrotoren (5, 6) zueinander gegensinnig synchron antreibbar sind.

5. Erntemaschine nach einem der vorhergehenden Ansprüche, wobei die genannte Zwischenriemenscheibe (11) frei drehbar gelagert ist und von dem ersten Aufbereiterrotor (5) her antreibbar ist, wobei der erste Aufbereiterrotor (5), vorzugsweise an einem dem Riementrieb (8) gegenüberliegenden Rotorende, mit einem Antriebsmotor direkt oder mittelbar getrieblich verbunden ist.

6. Erntemaschine nach einem der vorhergehenden Ansprüche, wobei die genannten zwei Riemeneingriffsabschnitte (11a, 11b) vorzugsweise denselben Durchmesser und/oder dieselbe Zähnezahl aufweisen.

7. Erntemaschine nach einem der vorhergehenden Ansprüche, wobei der erste Riemen (9) mit einer ersten Riemenseite (9i) mit dem ersten Aufbereiterrotor (5) und/oder einer mit dem ersten Aufbereiterrotor (5) verbundenen Rotorscheibe (14) in Eingriff steht und mit einer zweiten Riemenseite (9a), die der ersten Riemenseite (9i) gegenüberliegt, mit der genannten Zwischenriemenscheibe (11) in Eingriff steht, und der zweite Riemen (10) mit derselben Riemenseite (10i) sowohl mit der Zwischenriemenscheibe (11) als auch mit dem zweiten Aufbereiterrotor (6) und/oder einer mit dem zweiten Aufbereiterrotor (6) verbundenen Rotorscheibe (15) in Eingriff steht.

8. Erntemaschine nach einem der vorhergehenden Ansprüche, wobei der erste Riemen (9) über den ersten Aufbereiterrotor (5) und/oder eine damit verbundene Rotorscheibe (14), die Zwischenriemenscheibe (11) und zumindest eine weitere Riemenscheibe (16, 17) geführt ist und auf seiner Umlaufbahn gegensinnig gekrümmte Umlenkabschnitte durchläuft.

9. Erntemaschine nach dem vorhergehenden Anspruch, wobei die zumindest eine weitere Riemenscheibe eine Beschleunigerwalzen-Riemenscheibe (17) umfasst, die mit einem vorzugsweise walzenförmigen Beschleunigerrotor (18) verbunden ist.

10. Erntemaschine nach einem der vorhergehenden Ansprüche, wobei die Aufbereiterrotoren (5, 6) ineinander greifende Konditionierprofilabschnitte, insbesondere in Form von Schraubprofilsegmenten, umfassen.

11. Erntemaschine nach einem der vorhergehenden Ansprüche, wobei zumindest einer der Riemen (9, 10) als Zahnriemen, insbesondere doppelseitig verzahnter Zahnriemen, ausgebildet ist.

## Claims

1. Harvesting machine for processing harvested material, with at least one conditioning unit (4) which includes at least two cooperating, preferably approximately roll-shaped conditioning rotors (5, 6) for the conditioning of harvested material, wherein the conditioning rotors (5, 6) are supported to be adjustable in distance to one another and can be driven by a drive device (7) in a manner adapted to one another, **characterized in that** the drive device (7) comprises a belt drive (8), wherein a first belt (9) couples a first conditioning rotor (5) with an intermediate pulley (11), which, via a second belt (10), drives the second conditioning rotor (6), wherein the mentioned intermediate pulley (11) comprises two belt engagement portions (11a, 11b) arranged next to one another for the first and second belts (9, 10) and the first belt (9) and the second belt (10) revolve in parallel planes, which are spaced from one another.

2. Harvesting machine according to the preceding claim, wherein the second conditioning rotor (6), together with the intermediate pulley (11), is supported on a movably-supported rotor carrier (12).

3. Harvesting machine according to the preceding claim, wherein the mentioned rotor carrier (12) is pivotably supported about a carrier axis (13), which, in the region of the intermediate pulley (11), is arranged approximately parallel to the axis of rotation of the intermediate pulley (11), in particular approximately coaxially to the axis of rotation of the intermediate pulley (11).

4. Harvesting machine according to one of the preceding claims, wherein the belt drive (8) is formed in such a way that the first and second conditioning rotors (5, 6) can be driven synchronously in opposite directions.

5. Harvesting machine according to one of the preceding claims, wherein the mentioned intermediate pulley (11) is freely-rotatably supported and can be driven by the first conditioning rotor (5), wherein the first conditioning rotor (5) is directly or indirectly connected with a drive motor in a transmission-type manner, preferably on an end of the rotor opposite the belt drive (8).

6. Harvesting machine according to one of the preceding claims, wherein the mentioned two belt engagement portions (11a, 11b) preferably have the same diameter and/or the same number of teeth.

7. Harvesting machine according to one of the preceding claims, wherein the first belt (9), with a first belt side (9i), is in engagement with the first conditioning rotor (5) and/or with a rotor disc (14) connected with the first conditioning rotor (5), and with a second belt side (9a) opposite the first belt side (9i) is in engagement with the mentioned intermediate pulley (11), and the second belt (10), with the same belt side (10i), is in engagement with the intermediate pulley (11) as well as with the second conditioning rotor (6) and/or with a rotor disc (15) connected to the second conditioning rotor (6).

8. Harvesting machine according to one of the preceding claims, wherein the first belt (9) is guided via the first conditioning rotor (5) and/or a rotor disc (14) connected thereto, the intermediate pulley (11) and at least one further pulley (16, 17) and, on its revolving path, runs through deflecting portions curved in opposite directions.

9. Harvesting machine according to the preceding claim, wherein the at least one further pulley includes an accelerator roller pulley (17) which is connected to a, preferably roll-shaped, accelerator rotor (18).

10. Harvesting machine according to one of the preceding claims, wherein the conditioning rotors (5, 6) include conditioning profile sections, in particular in the form of screw profile segments.

11. Harvesting machine according to one of the preceding claims, wherein at least one of the belts (9, 10) is configured as a toothed belt, in particular a double-sided toothed belt.

## Revendications

1. Moissonneuse pour le traitement d'une récolte, comprenant au moins une unité conditionneur (4) qui comprend au moins deux rotors de conditionnement (5, 6) coopérants, de préférence à peu près cylindriques, pour conditionner la récolte, les rotors de conditionnement (5, 6) étant montés à une distance variable l'un de l'autre et pouvant être entraînés de manière coordonnée l'un par rapport à l'autre par un dispositif d'entraînement (7), **caractérisée en ce que** le dispositif d'entraînement (7) présente une transmission par courroie (8), une première courroie (9) accouplant un premier rotor de conditionnement (5) avec une poulie intermédiaire (11) qui entraîne au moyen d'une deuxième courroie (10) le deuxième rotor de conditionnement (6), la poulie intermédiaire (11) mentionnée comprenant deux segments d'engagement de courroie (11a, 11b) disposés l'un à côté de l'autre pour la première et la deuxième courroies (9, 10) et la première courroie (9) et la deuxième courroie (10) circulant dans des niveaux parallèles et espacés les uns des autres.

2. Moissonneuse selon la revendication précédente, **caractérisée en ce que** le deuxième rotor de conditionnement (6) est monté avec la poulie intermédiaire (11) sur un porte-rotor (12) qui est logé de manière mobile.

3. Moissonneuse selon la revendication précédente, ledit porte-rotor (12) mentionné étant monté de manière à pouvoir pivoter autour d'un axe porteur (13) qui est disposé dans la zone de la poulie intermédiaire (11) plus ou moins parallèlement à l'axe de rotation de la poulie intermédiaire (11), en particulier à peu près coaxialement à l'axe de rotation de la poulie intermédiaire (11).

4. Moissonneuse selon l'une quelconque des revendications précédentes, la transmission par courroie (8) étant conçue de telle sorte que le premier et le deuxième rotors de conditionnement (5, 6) peuvent être entraînés de manière synchrone en sens inverse l'un par rapport à l'autre.

5. Moissonneuse selon l'une quelconque des revendications précédentes, ladite poulie intermédiaire (11) étant montée de manière à pouvoir tourner librement et peut être entraînée par le premier rotor de conditionnement (5), ledit premier rotor de conditionnement (5), de préférence sur une extrémité de rotor opposée à la transmission par courroie (8), étant relié directement ou indirectement par engrenage à un moteur d'entraînement.

6. Moissonneuse selon l'une quelconque des revendications précédentes, lesdits deux segments d'engagement de courroie (11a, 11b) mentionnés présentant de préférence le même diamètre et/ou le même nombre de dents.

7. Moissonneuse selon l'une quelconque des revendications précédentes, la première courroie (9) étant en prise avec un premier côté de courroie (9i) avec le premier rotor de conditionnement (5) et/ou avec un disque de rotor (14) relié au premier rotor de conditionnement (5) et en prise avec le deuxième côté de courroie (9a), qui est opposé au premier côté de courroie (9i), avec la poulie intermédiaire (11) mentionnée, et la deuxième courroie (10) avec le même côté de courroie (10i) étant en prise aussi bien avec la poulie intermédiaire (11) qu'avec le deuxième rotor de conditionnement (6) et/ou avec le disque de rotor (15) relié au deuxième rotor de conditionnement (6).

8. Moissonneuse selon l'une quelconque des revendications précédentes, la première courroie (9) étant guidée à travers le premier rotor de conditionnement (5) et/ou un disque de rotor (14) relié à ce dernier, la poulie intermédiaire (11) et au moins une autre poulie (16, 17), et passe dans sa trajectoire par des sections déflectrices courbées en sens inverse.

9. Moissonneuse selon la revendication précédente, l'au moins une autre poulie comprenant une poulie pour rouleau accélérateur (17), qui est reliée à un rotor d'accélération (18) de préférence cylindrique.

10. Moissonneuse selon l'une quelconque des revendications précédentes, les rotors de conditionnement (5, 6) comprenant des sections profilées de conditionnement en prise l'une dans l'autre, en particulier sous forme de segments profilés de vissage.

11. Moissonneuse selon l'une quelconque des revendications précédentes, au moins l'une des courroies (9, 10) étant conçue comme une courroie dentée, en particulier comme une courroie dentée sur les deux côtés.
